(19)

Europäisches Patentamt
European Patent Office
Office européen des brevets

(11) **EP 4 475 381 A1**

(12) **EUROPEAN PATENT APPLICATION**
published in accordance with Art. 153(4) EPC

(43) Date of publication:
**11.12.2024 Bulletin 2024/50**

(21) Application number: **23773506.3**

(22) Date of filing: **16.02.2023**

(51) International Patent Classification (IPC):
**H02J 7/00** (2006.01)     **H02J 7/04** (2006.01)

(52) Cooperative Patent Classification (CPC):
**H02J 7/00; H02J 7/04**

(86) International application number:
**PCT/CN2023/076385**

(87) International publication number:
**WO 2023/179255 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.03.2022 CN 202210294330**

(71) Applicant: **Huawei Technologies Co., Ltd.
Shenzhen, Guangdong 518129 (CN)**

(72) Inventors:
• **HU, Zhangrong
  Shenzhen, Guangdong 518129 (CN)**
• **YANG, Jie
  Shenzhen, Guangdong 518129 (CN)**
• **YANG, Tianyu
  Shenzhen, Guangdong 518129 (CN)**

(74) Representative: **Gill Jennings & Every LLP
The Broadgate Tower
20 Primrose Street
London EC2A 2ES (GB)**

(54) **CHARGING DEVICE AND METHOD, AND RELATED EQUIPMENT**

(57)     Embodiments of this application provide a charging apparatus and method, and a related device, and relate to the field of battery charging technologies. The charging apparatus is used in an electronic device. The electronic device includes a battery module, and the battery module corresponds to a constant voltage charging phase in a charging process. The apparatus includes a charging control unit and a processing unit. The charging control unit is configured to output a preset first voltage to the battery module in the constant voltage charging phase. The processing unit is configured to: obtain a voltage value of a second voltage of the battery module in the constant voltage charging phase, and obtain, based on the voltage value of the second voltage, adjustment information corresponding to the preset first voltage, where the second voltage is an actual charging voltage obtained by the battery module at the preset first voltage. The charging control unit is further configured to: adjust the preset first voltage based on the adjust information, and output a third voltage to the battery module. According to embodiments of this application, a charging voltage in the constant voltage charging phase can be calibrated, to ensure a battery life and power consumption safety of the electronic device.

FIG. 3

EP 4 475 381 A1

## Description

This application claims priority to Chinese Patent Application No. 202210294330.0, filed with the China National Intellectual Property Administration on March 24, 2022 and entitled "CHARGING APPARATUS AND METHOD, AND RELATED DEVICE", which is incorporated herein by reference in its entirety.

## TECHNICAL FIELD

This application relates to the field of battery charging technologies, and in particular, to a charging apparatus and method, and a related device.

## BACKGROUND

With rapid development of electronic devices, related battery technologies also develop rapidly. Because different types of batteries have different principles, the types of batteries have different charging requirements. In the current field of wired battery charging, a battery charged based on a buck (Buck) conversion circuit experiences a constant voltage (Constant Voltage, CV) charging phase during a complete charging period. The constant voltage charging phase means that a charging voltage of a charging power supply for the battery keeps a constant value (the value may be understood as a voltage value of the charging voltage) during charging time of the phase. In addition, as the charging time increases, power of a battery module gradually increases, and a voltage of the battery module also gradually increases to approach the charging voltage. In the constant voltage charging phase, when a charging current is less than a preset current value, it may be considered that the battery is fully charged, and therefore a charging process ends.

Therefore, in the constant voltage charging phase, if the charging voltage is inconsistent with a preset full-charge voltage (namely, an ideal voltage value obtained when the battery is fully charged) of the battery, after charging of the battery ends, a final battery level of the battery obtained when the charging ends is inconsistent with an ideal full capacity. In addition, if an actual voltage exceeds the preset full-charge voltage, not only energy waste and damage to the battery may be caused, but also battery explosion may be caused. If the actual voltage is less than the preset full-charge voltage, the battery may not be fully charged, and consequently a battery life is affected. A lithium battery commonly used in a mobile phone is used as an example. Based on a full-charge voltage, a capacity of the battery decreases by approximately 1% each time the voltage decreases by 10 mV, and a battery life decreases accordingly.

Therefore, how to adjust a charging voltage in the constant voltage charging phase is an urgent problem to be resolved.

## SUMMARY

Embodiments of this application provide a charging apparatus and method, and a related device, and relate to the field of battery charging technologies, to calibrate a charging voltage in a constant voltage charging phase, so as to ensure a battery life and power consumption safety of an electronic device.

According to a first aspect, an embodiment of this application provides a charging apparatus, used in an electronic device. The electronic device includes a battery module, and the battery module corresponds to a constant voltage charging phase in a charging process. The apparatus includes a charging control unit and a processing unit. The charging control unit is configured to output a preset first voltage to the battery module in the constant voltage charging phase. The processing unit is configured to: obtain a voltage value of a second voltage of the battery module in the constant voltage charging phase, and obtain, based on the voltage value of the second voltage, adjustment information corresponding to the preset first voltage, where the second voltage is an actual charging voltage obtained by the battery module at the preset first voltage. The charging control unit is configured to: adjust the preset first voltage based on the adjustment information, and output a third voltage to the battery module, where the third voltage is an adjusted first voltage.

In a conventional technology, if a charging voltage in a constant voltage charging phase is less than a preset full-charge voltage of a battery, the battery may not be fully charged, and consequently a battery life of an electronic device is affected. In addition, to ensure that a charging voltage of the battery does not exceed a preset full-charge voltage (the preset full-charge voltage may be understood as the preset battery full-charge voltage), in an existing adjustment manner, the charging voltage of the battery is usually calibrated below the preset full-charge voltage. In addition, in the existing adjustment manner, impact of factors such as board-level stress, a temperature, and component aging on a constant voltage charging voltage cannot be eliminated. Therefore, a difference between an actual charging voltage of the battery and the preset full-charge voltage may be excessively large. Consequently, a battery level of a battery of an electronic device (for example, a mobile phone, a tablet, a smart watch, or a wireless headset) in a use life cycle cannot reach an ideal full capacity, and a battery life or even a service life of the electronic device is affected. Therefore, an embodiment of this application provides a charging apparatus, applied to the field of battery charging technologies, to adjust a charging voltage in a constant voltage charging phase, so as to ensure a battery life and power consumption safety of an electronic device. The charging apparatus includes a charging control unit and a processing unit. In the constant voltage charging phase, the charging control unit may output the preset first voltage (the preset first voltage is a voltage that is output by the charging control unit to the battery module based on the preset full-charge voltage) to the battery module. The processing unit is equivalent to a processing unit, a processing chip, a system-on-a-chip (System-on-a-chip, SOC), or the like in the electronic device. In the constant voltage charging phase, the voltage value (the voltage value of the second voltage is equivalent to an actual charging voltage value received by the battery module when the charging control unit outputs a current preset first voltage to the battery module) of the second voltage corresponding to the battery module in the constant voltage charging phase may be obtained; and the adjustment information corresponding to the preset first voltage is obtained based on the voltage value of the second voltage. The charging control unit may further adjust the preset first voltage in the constant voltage charging phase based on the adjustment information, and output the third voltage (the third voltage is the adjusted first voltage) to the battery module. In this way, when the charging control unit outputs the third voltage to the battery module, an actual charging voltage received by the battery module is closer to the preset full-charge voltage, thereby improving battery charging precision. In addition, the actual charging voltage does not exceed the preset full-charge voltage. In addition, in this embodiment of this application, a charging voltage for the battery module in the charging process is obtained, so that a current charging voltage of the battery module can be adjusted based on impact of each factor in the actual charging process (that is, in this embodiment of this application, the charging voltage of the battery module changes in the constant voltage charging phase). In this way, impact of factors such as board-level stress, a temperature, and component aging on the battery module in the actual charging process can be avoided, and the charging voltage can be further adjusted in a timely manner during a charging period, so that the battery during a current charging period can reach an ideal charging state. This avoids a case in which the battery is found to be not fully charged only after charging is completed, and even avoids a case in which a charging voltage is excessively high. Therefore, in this embodiment of this application, an actual charging voltage of the battery module may be adjusted in the constant voltage charging phase, to ensure a battery life of the electronic device.

In a possible implementation, a voltage value of the third voltage is greater than a voltage value of the preset first voltage.

In this embodiment of this application, the voltage value of the third voltage is greater than the voltage value of the preset first voltage. In other words, correspondingly, when the charging control unit outputs the third voltage to the battery module, an actual charging voltage value received by the battery module is greater than an actual charging voltage value received by the battery module when the charging control unit outputs the current preset first voltage to the battery module. Therefore, a capacity of the fully-charged battery module that is obtained after the battery module is charged at the third voltage is higher than a capacity of the fully-charged battery module that is obtained after the battery module is charged at the preset first voltage, thereby greatly enhancing a battery life of the electronic device.

In a possible implementation, the charging apparatus further includes a detection unit. The detection unit is configured to detect a voltage value of the second voltage and send the voltage value to the processing unit.

In this embodiment of this application, the charging apparatus further includes the detection unit. In the constant voltage charging phase, the detection unit (for example, a high-precision detection apparatus) may be used to detect the voltage value of the second voltage. The detection unit may be located inside the charging control unit or inside the processing unit, or the detection unit is independent of the charging control unit and the processing unit, and is coupled to the battery module.

In a possible implementation, the detection unit is a voltameter. The voltameter is configured to detect the voltage value of the second voltage and send the voltage value to the processing unit.

In this embodiment of this application, the detection unit may be a voltameter in the electronic device. The voltameter is configured to measure a related parameter (for example, a battery charging current or an actual battery charging voltage) of the battery module. Therefore, the voltameter may detect the voltage value of the second voltage and send the voltage value to the processing unit. The voltage value of the second voltage is detected by using an existing component in the electronic device, so that hardware space and costs of the electronic device are reduced.

In a possible implementation, the voltameter is configured to: when a temperature corresponding to the electronic device is within a preset temperature range, detect the voltage value of the second voltage and send the voltage value to the processing unit.

A temperature change of the electronic device affects precision of the second voltage obtained by the voltameter. Therefore, in this embodiment of this application, before the voltage value of the second voltage is obtained, a current temperature corresponding to the electronic device further needs to be determined. When the temperature corresponding to the electronic device is within the preset temperature range, the voltage value of the charging voltage that is obtained by the voltameter is reliable. Therefore, in a subsequent adjustment process, precision of an adjusted charging voltage is more accurate.

In a possible implementation, the adjustment information includes a first adjustment amount, and the first adjustment amount is a difference between the voltage value of the second voltage and a preset voltage value.

In this embodiment of this application, the adjustment information is adjustment information for the preset first voltage, and the preset voltage value is a voltage value of a preset full-charge voltage. If it is determined that an actual charging voltage received by the battery module at the preset first voltage does not reach the preset full-charge voltage, the preset first voltage may be adjusted based on the preset full-charge voltage, so that the actual charging voltage (the second voltage) received by the battery module increases to the preset full-charge voltage accordingly. For example, if the preset first voltage increases by 10 mV, the actual charging voltage (the second voltage) received by the battery module increases by 10 mV accordingly.

In a possible implementation, the adjustment information corresponding to the preset first voltage is obtained based on the voltage value of the second voltage and the preset voltage value.

In this embodiment of this application, adjustment of the preset first voltage is determined based on a value relationship between the voltage value of the second voltage (a voltage value of the actual charging voltage) and the preset voltage value corresponding to the battery module, so that a final battery level of the battery obtained when charging ends can be closer to an ideal full battery capacity. In this way, a battery life is improved. In addition, a safety risk that occurs because the actual charging voltage is greater than the preset full-charge voltage of the battery can be avoided, and charging safety during a charging period can be ensured.

In a possible implementation, the processing unit is specifically configured to: obtain voltage values that are of the second voltage and that respectively correspond to a plurality of time points; compare a voltage value of the second voltage corresponding to each time point in the plurality of time points with the preset voltage value, to obtain a voltage difference corresponding to each time point in the plurality of time points; and determine the adjustment information based on the voltage difference corresponding to each time point in the plurality of time points.

In this embodiment of this application, the adjustment information for calibrating the charging voltage is determined based on differences between a plurality of obtained voltage values of the second voltages and the preset voltage value. This can reduce an error generated when only one charging voltage value is obtained, so that an adjusted charging voltage is more accurate in a subsequent calibration process. Time intervals between every two adjacent time points in the plurality of time points are equal.

In a possible implementation, the detection unit is further configured to detect a current value of a first current and send the current value to the processing unit, where the first current is a corresponding charging current of the battery module at the preset first voltage. The processing unit is specifically configured to determine the adjustment information based on the voltage value of the second voltage and the current value of the first current.

In this embodiment of this application, the detection unit is configured to detect a voltage value (the voltage value of the second voltage) of a charging voltage corresponding to the battery module at the current preset first voltage, and is further configured to detect the current value of the present first current. The processing unit may further determine the adjustment information based on the obtained voltage value of the second voltage and the obtained current value of the first current. In addition, the detection unit may alternatively be a voltmeter.

In a possible implementation, the adjustment information includes a second adjustment amount. The second adjustment amount is a variation by which the preset first voltage varies with the first current, and the second adjustment amount is positively correlated with the first current.

In this embodiment of this application, the charging control unit may include a charging chip, and charge the battery module by using a fourth voltage that is output by the charging chip. The charging chip may be connected to the battery module through, for example, a conducting wire. Because the conducting wire has an impedance, the fourth voltage that is output by the charging chip is divided by the impedance. In other words, the preset first voltage may be understood as a voltage that is input to the battery module and that is obtained after the fourth voltage is divided by the impedance. Therefore, the charging apparatus may compensate, based on the voltage obtained through voltage division by the impedance, the fourth voltage that is output by the charging chip, to adjust the preset first voltage. In addition, a charging voltage of the battery module needs to be kept stable in the constant voltage charging phase. Therefore, as charging time increases, power of the battery module gradually increases, and the first current gradually decreases. Consequently, the voltage obtained through voltage division by the impedance also gradually decreases. Therefore, the second adjustment amount in the adjustment information for the preset first voltage is a variation by which the preset first voltage varies with the first current, and the second adjustment amount is positively correlated with the first current.

According to a second aspect, an embodiment of this application provides a method for voltage adjustment during constant voltage charging. The method is applied to an electronic device. The electronic device includes a battery module, and the battery module corresponds to a constant voltage charging phase in a charging process. In the constant voltage charging phase, the method includes: outputting a preset first voltage to the battery module by using a charging control unit; by using a processing unit, obtaining a voltage value of a second voltage of the battery module, and obtaining, based on the voltage value of the second voltage, adjustment information corresponding to the preset first voltage, where the second voltage is an actual charging voltage obtained by the battery module at the preset first voltage; and by using the charging control unit, adjusting the preset first voltage based on the adjustment information, and outputting a third voltage to the battery module, where the third voltage is an adjusted first voltage.

In a possible implementation, a voltage value of the third voltage is greater than a voltage value of the preset first voltage.

In a possible implementation, the method further includes: detecting the voltage value of the second voltage and sending the voltage value to the processing unit by using a detection unit.

In a possible implementation, the detection unit is a voltameter; and the detecting the voltage value of the second voltage and sending the voltage value to the processing unit by using a detection unit includes: detecting the voltage value of the second voltage and sending the voltage value to the processing unit by using the voltameter.

In a possible implementation, the detecting the voltage value of the second voltage and sending the voltage value to the processing unit by using the voltameter includes: when a temperature corresponding to the electronic device is within a preset temperature range, detecting the voltage value of the second voltage and sending the voltage value to the processing unit by using the voltameter.

In a possible implementation, the adjustment information includes a first adjustment amount, and the first adjustment amount is a difference between the voltage value of the second voltage and a preset voltage value.

In a possible implementation, the obtaining, based on the voltage value of the second voltage, adjustment information corresponding to the preset first voltage includes: obtaining, based on the voltage value of the second voltage and the preset voltage value, the adjustment information corresponding to the preset first voltage.

In a possible implementation, the obtaining, based on the voltage value of the second voltage and the preset voltage value, the adjustment information corresponding to the preset first voltage includes: comparing a voltage value of the second voltage corresponding to each time point in the plurality of time points with the preset voltage value, to obtain a voltage difference corresponding to each time point in the plurality of time points; and determining the adjustment information based on the voltage difference corresponding to each time point in the plurality of time points.

In a possible implementation, the method further includes: detecting a current value of a first current and sending the current value to the processing unit by using the detection unit, where the first current is a charging current corresponding to the battery module at the preset first voltage. The obtaining, based on the voltage value of the second voltage, adjustment information corresponding to the preset first voltage includes: determining the adjustment information based on the voltage value of the second voltage and the current value of the first current.

In a possible implementation, the adjustment information includes a second adjustment amount. The second adjustment amount is a variation by which the preset first voltage varies with the first current, and the second adjustment amount is positively correlated with the first current.

According to a third aspect, an embodiment of this application provides an electronic device. The electronic device includes a battery module and the charging apparatus according to the first aspect and the embodiments related to the first aspect. The charging apparatus is electrically connected to the battery module.

According to a fourth aspect, an embodiment of this application provides a computer-readable storage medium, configured to store computer software instructions used by the charging apparatus provided in the first aspect, and the computer software instructions include a program designed for executing the foregoing aspect.

According to a fifth aspect, an embodiment of this application provides a computer program. The computer program includes instructions, and when the computer program is executed by a computer, the computer is enabled to perform the procedure performed by the charging apparatus in the first aspect.

According to a sixth aspect, this application provides a chip system. The chip system includes a processor and a charging control unit, configured to support an electronic device in implementing a function in the first aspect, for example, generating or processing information in the charging method. In a possible design, the chip system further includes a memory. The memory is configured to store program instructions and data that are necessary for a data sending device. The chip system may include a chip, or may include a chip and another discrete component.

**BRIEF DESCRIPTION OF DRAWINGS**

To describe the technical solutions in embodiments of this application or in the background more clearly, the following describes the accompanying drawings for describing embodiments of this application or the background.

FIG. 1 is a schematic circuit diagram of battery charging in an existing electronic device according to an embodiment of this application;
FIG. 2 is a schematic diagram of a structure of an electronic device according to an embodiment of this application;
FIG. 3 is a schematic diagram of a structure of a charging apparatus according to an embodiment of this application;
FIG. 4 is a schematic diagram of a current and a voltage corresponding to a battery in a constant voltage charging phase according to an embodiment of this application;
FIG. 5 is a schematic diagram of level information according to an embodiment of this application;
FIG. 6 is a schematic diagram of another piece of level information according to an embodiment of this application;
FIG. 7 is a schematic diagram of detecting a current and a voltage corresponding to a battery in a constant voltage charging phase based on FIG. 4 according to an embodiment of this application;

FIG. 8 is a schematic diagram of a structure of another charging apparatus according to an embodiment of this application;

FIG. 9 is a schematic diagram of resistance level information according to an embodiment of this application; and

FIG. 10 is a schematic flowchart of a charging method according to an embodiment of this application.

## DESCRIPTION OF EMBODIMENTS

The following describes embodiments of this application with reference to the accompanying drawings in embodiments of this application.

In the specification, claims, and accompanying drawings of this application, the terms "first", "second", "third", "fourth", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" refers to one or more, and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between associated objects. "At least one of the following items

(pieces)" or a similar expression thereof refers to any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural.

Mentioning an "embodiment" in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using a signal).

First, to facilitate understanding of embodiments of this application, the following specifically analyzes technical problems that need to be resolved in embodiments of this application and application scenarios.

In the conventional technology, after an existing electronic device is connected to a charging adapter (for example, a charger), the charging adapter may charge a battery by using a charging chip in the electronic device. In this way, in a subsequent charging process, the charging chip may control, in a related phase, a corresponding voltage or current to remain unchanged. For example, in a constant voltage charging phase, the charging chip may output a constant charging voltage to the battery, and as charging time increases, a voltage of a battery module also gradually increases to approach the charging voltage. In the constant voltage charging phase, when a charging current is less than a preset current value, it may be considered that the battery is fully charged, and therefore a charging process ends.

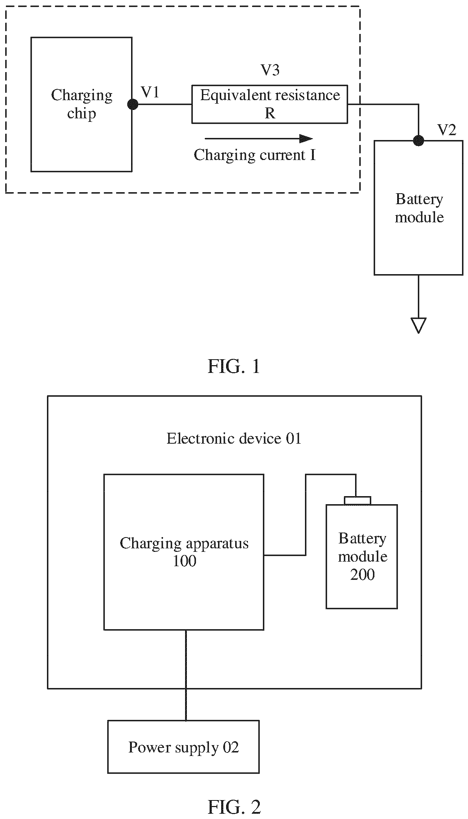

FIG. 1 is a schematic circuit diagram of battery charging in an existing electronic device according to an embodiment of this application. As shown in FIG. 1, a charging chip outputs a charging voltage to a battery module. A voltage drop occurs in the output charging voltage $V1$ due to an equivalent resistance $R$ (namely, an impedance existing in a charging process), and a charging voltage $V2$ finally applied to the battery module is less than the charging voltage $V1$ that is output by the charging chip. In other words, it may be learned from the circuit shown in FIG. 1 that a relationship between the charging voltage $V1$ that is output by the charging chip, the battery charging voltage $V2$, a charging current $I$, and the equivalent resistance $R$ may be represented by using the following formula: $V1=V2+V3=V2+I\times R$, that is, $V2=V1-I\times R$. The charging voltage $V1$ that is output by the charging chip is a voltage that is output by the charging chip based on a preset full-charge voltage (which may alternatively be understood as a preconfigured battery full-charge voltage).

In addition, due to an additional impedance existing in a board (printed circuit board, PCB)-level cable, a battery connector, a charging connection wire, or the like inside the electronic device, the charging voltage V1 that is output by the charging chip deviates from the charging voltage V2 actually obtained by the battery module. In addition, in a constant voltage charging phase, when a charging current is less than a preset current value, it may be considered that the battery is fully charged, and therefore a charging process ends.

Therefore, to control an actual charging voltage of the battery in the charging process to be consistent with the preset full-charge voltage, in the conventional technology, the charging voltage that is output by the charging chip is usually adjusted from the following two aspects.

(1) From the aspect of a preset full-charge voltage in the charging chip

The preset full-charge voltage in the charging chip is a battery charging voltage preconfigured in the charging chip. When an impedance in the charging process is 0, all of a charging voltage that is output by the charging chip may be output to the battery module (that is, V1=V2). However, in this case, the charging voltage V1 that is output by the charging chip is usually inconsistent with the battery charging voltage (the preset full-charge voltage) preconfigured in the charging chip due to factors such as board-level stress, a temperature, and component aging. In this way, in an actual charging process, a charging voltage of the battery module cannot reach the preset full-charge voltage, and consequently final power of the battery module when charging ends cannot reach an ideal full capacity. From this aspect, in the conventional technology, the battery charging voltage preconfigured in the charging chip is usually adjusted in the following two manners.

Manner 1: After the charging chip is produced, a constant voltage charging voltage that is in the constant voltage charging phase and that is controlled by the charging chip may be calibrated by using chip integrated circuit automatic test equipment (Automatic Test Equipment, ATE), so that a calibrated charging chip can control, in the constant voltage charging phase, the constant voltage charging voltage to approach the preset full-charge voltage as much as possible. In a calibration process, the chip integrated circuit automatic test equipment is equipped with a high-precision power supply (with an error within a range of $\pm 1$ mV), to test a difference between an actual value of the constant voltage charging voltage controlled by the charging chip and a target value (namely, the preset full-charge voltage) in the constant voltage charging phase. A trimming code is calculated based on the difference, and the trimming code may be further burnt into the chip, so that the charging voltage in the actual charging process is compensated by using the trimming code. In addition, because the trimming code is directly burnt into the chip, the foregoing compensation may take effect permanently in the actual charging process.

However, Manner 1 has the following disadvantages:

1. In a manufacturing process of the electronic device, after the charging chip is on a board, precision of a constant voltage charging voltage is distorted due to factors such as various connection relationships (that is, there is a connection impedance) and a production process. The trimming code previously used to correct the charging chip cannot resolve this problem, and a deviation range needs to be reserved in a pre-calibration threshold (namely, a calibration error). Consequently, in an actual application process of the electronic device, the charging voltage cannot reach the preset full-charging voltage.

2. In a charging process of the electronic device, a temperature changes. Consequently, a temperature drift error is generated when the charging chip works in a full-temperature environment. The temperature drift error also makes the constant voltage charging voltage in the constant voltage charging phase fail to reach the preset full-charge voltage. Similarly, calibration cannot be performed by using the previous chip integrated circuit automatic test equipment, and the deviation range also needs to be reserved in the pre-calibration threshold.

Therefore, in an example of an intelligent terminal, the foregoing two deviations (the charging chip distortion and temperature drift error) require that a margin of at least $\pm 0.5\%$ should be reserved for an ATE pre-calibration threshold voltage, that is, approximately $\pm 25$ mV. If calculation is performed based on a lower limit, an actual battery full-charge voltage decreases by 50 mV, that is, a capacity decreases by approximately 5%.

Manner 2: A related calibration apparatus is added to a production line of the electronic device to perform calibration. For example, in the production line of the electronic device, a programmable power supply is externally connected to simulate a battery, simulate a charging process, and test an actual charging cutoff voltage value (equivalent to the constant voltage charging voltage). Then, a difference between a nominal battery value and the actual charging cutoff voltage value is calculated, a register configuration is adjusted based on the difference, and the charging chip of the electronic device is calibrated and trimmed. After a function is re-tested, the charging chip can be delivered and used.

However, Manner 2 has the following disadvantages:

1. Production resources such as a calibration station and a re-test station are required in the production line, which leads to long test time and high costs.

2. A temperature drift error is large within a full temperature range. During production line calibration, impact of a temperature also needs to be considered during actual use, and a large margin needs to be reserved for a pre-calibration threshold.

3. Aging distortion occurs in the chip at a later stage of use. This problem cannot be resolved in a calibration manner in the production line, and a deviation range has to be reserved in the pre-calibration threshold.

Therefore, in an example of an intelligent terminal, the foregoing deviations require that a margin of at least $\pm 0.3\%$ should be reserved for a pre-calibration threshold voltage, that is, approximately $\pm 15$ mV. If calculation is performed based on a lower limit, an actual battery full-charge voltage decreases by 30 mV, that is, a capacity decreases by approximately 3%.

In conclusion, in the conventional technology, it cannot be ensured that a charging voltage that is output by a charging chip reaches an ideal charging voltage in an actual charging process.

(2) From the aspect of an impedance preconfigured in the charging chip

When an actual impedance (equivalent to the equivalent resistance R shown in FIG. 1) in the charging process is not 0, due to existence of the actual impedance, only a part of the charging voltage is used to charge the battery module, and the charging voltage that is output by the charging chip cannot be all output to the battery module. In an existing charging chip, to resolve a problem that a charging voltage of a battery module is divided due to an additional impedance in a charging process, in a constant voltage charging phase, voltage compensation is usually performed on an impedance in the charging process in an IR compensation manner, to enable all of the charging voltage that is output by the charging chip to be output to the battery module as much as possible. The IR compensation manner specifically refers to the following. The charging chip obtains, through calculation based on a preconfigured compensation resistance R value (that is, equivalent to the preset equivalent resistance R value) and a current value in an actual charging process, a compensation voltage value corresponding to the impedance in the charging process. Then, an actual output voltage of the charging chip is raised based on the preset full-charge voltage of the charging chip and the foregoing compensation voltage value, so that the charging voltage output to the battery module is closer to the preset full-charge voltage.

However, in an actual charging process, the actual impedance in the charging process fluctuates within a specific range due to reasons such as a printed circuit board difference and component discreteness. Therefore, to prevent a safety problem like battery overcharging caused by overcompensation, the compensation resistance R value is usually configured as a low value or even not configured. Consequently, for an electronic device that has an impedance or whose actual impedance is relatively large, an actual charging voltage of a battery module is still lower than a preset full-charge voltage, and consequently a battery level of the battery still cannot reach an ideal full capacity.

Therefore, to resolve the foregoing two defects and ensure as much as possible that the actual charging voltage of the battery in the constant voltage charging phase in the charging process is consistent with the preset full-charge voltage, an embodiment of this application provides a charging apparatus that automatically adjusts a constant voltage charging voltage in each charging process of an electronic device. The charging apparatus includes a processing unit and a charging control unit. The processing unit is configured to: obtain a voltage value of a second voltage in the constant voltage charging phase, where the second voltage is an actual charging voltage obtained by a battery module at a preset first voltage; and obtain, based on the voltage value of the second voltage, adjustment information corresponding to the preset first voltage. The charging control unit is configured to: adjust, based on the adjustment information, a charging voltage output in the constant voltage charging phase; and then charge the battery by using an adjusted charging voltage that is output by the charging control unit. The apparatus may adjust, in the constant voltage charging phase based on the actual charging voltage of the battery module, the charging voltage that is output by the charging apparatus, so that the actual charging voltage in this embodiment of this application is closer to a preset full-charge voltage within a safe range, thereby ensuring a battery life and power consumption safety of the electronic device.

It should be noted that the charging chip mentioned in the foregoing embodiment and the following related embodiment is an apparatus that is in an electronic device and that is configured to control a power supply to charge a battery, and may be further configured to control a charging voltage and/or a charging current in a charging process, and may further control charging start, charging end, and the like.

It should be further noted that the electronic device in embodiments of this application may be a mobile power supply (for example, a mobile power pack) including a rechargeable battery; a mobile terminal, for example, an intelligent wearable device (for example, smart glasses, a smart watch, a sports band, or a headset), a notebook computer, a mobile phone, a tablet computer, a camera, a wireless mouse, or a wireless keyboard; a smart home appliance, for example, a robotic vacuum cleaner, a smart speaker, a radio, a portable projector, an electric toothbrush, an electric razor, a fan, and a rechargeable lighting device (for example, a flashlight, a desk lamp, and a light); or an electric car, for example, an electric vehicle (for example, a balance vehicle, an electric wheelchair, a golf cart, an electric bicycle, or an electric pallet truck), an uncrewed aerial vehicle, or a mobile robot. This is not specifically limited in embodiments of this application.

It should be further noted that the rechargeable battery may be a lead-acid battery, a nickel-cadmium battery, a nickel-iron battery, a nickel-hydrogen battery, a lithium-ion battery, or the like. A material and a capacity of the rechargeable battery are not specifically limited in embodiments of this application.

Based on the foregoing technical problem and a corresponding application scenario in this application, to facilitate understanding of embodiments of this application, the following first describes an electronic device on which embodiments of this application are based. FIG. 2 is a schematic diagram of a structure of an electronic device according to an embodiment of this application. As shown in FIG. 2, an electronic device 01 in this application may include a charging apparatus 100 and a battery module 200 in FIG. 2. The electronic device 01 may be connected to a power supply 02 through a charging adapter (not shown in the figure), and the power supply 02 supplies power to the battery module 200 in the electronic device 01.

The battery module 200 is a rechargeable/dischargeable battery, and may supply power to various components of the electronic device 01. In an embodiment, the battery module 200 may be a rechargeable lead-acid battery, a rechargeable nickel-cadmium battery, a rechargeable nickel-iron battery, a rechargeable nickel-hydrogen battery, a rechargeable lithium-ion battery, or the like. One or more battery packs of such a battery may be configured as the power supply to supply power to the components of the electronic device 01. In addition, a capacity of the battery module 200 is not specifically limited in this embodiment of this application. For example, the capacity of the battery module 200 may be 20000 mAh, 10000 mAh, 4400 mAh, 100 mAh, or the like. The capacity of the battery module 200 is related to a full-charge voltage of the battery module 200.

The charging apparatus 100 may receive a charging input of the power supply 02 from a charging adapter (for example, a charger), and charge the battery module 200. The charging apparatus 100 may control a value of a charging voltage and a value of a charging current in a charging process, or may stop charging the battery when an end of charge (End Of Charge, EOC) condition is met, and indicate that charging of the battery module is completed. In addition, in this embodiment of this application, the charging apparatus 100 may charge the battery module at a preset first voltage in the constant voltage charging phase. The preset first voltage is a voltage that is output by the charging apparatus to the battery module based on a preset full-charge voltage. A preset charging voltage in the constant voltage charging phase may be further adjusted based on feedback of an actual charging voltage of the battery module, to ensure power consumption safety of the electronic device and improve a battery life of the electronic device. For specific descriptions of adjusting, by the charging apparatus 100, the charging voltage in the constant voltage charging phase, refer to the following related apparatus embodiment. Details are not described herein in this embodiment of this application.

It should be noted that although FIG. 2 functionally shows the charging apparatus and the battery module in the electronic device, a person of ordinary skill in the art should understand that the charging apparatus may actually include a plurality of processors or control hardware circuits stored in a same physical housing or different physical housings. Thus, it is understood that a reference to the charging apparatus includes a reference to a set of processors or computers or memories that may or may not operate in parallel. Different from using a single processor to perform the steps described herein, some components in the charging apparatus may have respective processors, and the processor performs only calculation related to a component-specific function.

It may be understood that the schematic diagram of the electronic device architecture in FIG. 2 is merely an example implementation in embodiments of this application. Electronic device architectures in embodiments of this application include but are not limited to the foregoing electronic device architecture.

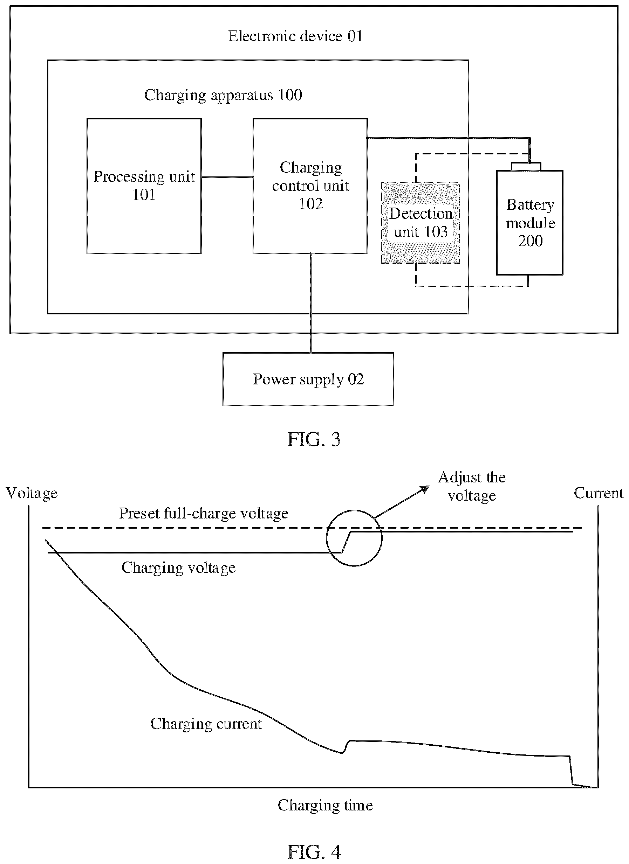

Based on the example of the electronic device shown in FIG. 2, an embodiment of this application provides a charging apparatus 100 used in the foregoing electronic device. FIG. 3 is a schematic diagram of a structure of a charging apparatus according to an embodiment of this application. As shown in FIG. 3, the charging apparatus 100 of the electronic device 01 may include a processing unit 101 and a charging control unit 102, and may further include a detection unit 103.

The processing unit 101 is equivalent to a processing unit, a processing chip, a system-on-a-chip (System-on-a-chip, SOC), or the like in the electronic device. In this embodiment of this application, the processing unit 101 is configured to: obtain a voltage value of a second voltage of the battery module in the constant voltage charging phase, and determine, based on the voltage value of the second voltage, adjustment information corresponding to the preset first voltage. The second voltage is an actual charging voltage obtained by the battery module 200 at the preset first voltage. The processing unit 101 may be further configured to send the adjustment information to the charging control unit 102. For a manner of obtaining the second voltage by the processing unit 101, correspondingly refer to related descriptions of the detection unit 103 in the following embodiment. Details are not described herein in this embodiment of this application.

In some other embodiments, a function of the processing unit 101 may alternatively be disposed in the charging control unit 102. In other words, the processing unit 101 may alternatively be a processing module in the charging control unit. This is not specifically limited in this embodiment of this application.

The charging control unit 102 is configured to: receive a charging input of the power supply 02 from a charging adapter (for example, a charger), and output a charging voltage to the battery module 200, to charge the battery module 200. In this embodiment of this application, the charging control unit 102 is further configured to: output the preset first voltage to the battery module in the constant voltage charging phase; and after receiving the adjustment information, adjust, based on the adjustment information, the preset first voltage output in the constant voltage charging phase, and output a third voltage to the battery module 200, where the third voltage is an adjusted first voltage. The charging adapter is a wired charging adapter. In some wired charging embodiments, the charging control unit 102 may receive a charging input of the wired charging adapter through an interface like a USB interface, a USB Type-C interface, a lightning interface, a combo connector interface, or a combined charging system (Combined Charging System, CCS). This is not specifically limited in this embodiment of this application.

Optionally, the third voltage that is output by the charging apparatus to the battery module is greater than the preset first voltage that is output by the charging apparatus. In other words, a voltage value of the third voltage is greater than a voltage value of the preset first voltage. It may be understood that the charging apparatus adjusts the first voltage by increasing the first voltage, so that the second voltage corresponding to the battery is closer to the preset full-charge voltage, thereby improving precision of the charging voltage and improving a battery life of a fully-charged battery. Therefore, refer to FIG. 4. FIG. 4 is a schematic diagram of a current and a voltage corresponding to a battery in a constant voltage charging phase according to an embodiment of this application. As shown in FIG. 4, the third voltage enables an actual charging voltage (namely, the second voltage) corresponding to the battery to be closer to the preset full-charge voltage. In other words, correspondingly, an actual charging voltage value received by the battery module when the charging control unit 102 outputs the third voltage to the battery module is greater than an actual charging voltage value received by the battery module when the charging control unit 102 outputs the preset first voltage to the battery module. Therefore, a capacity of the fully-charged battery module that is obtained after the battery module is charged at the third voltage is higher than a capacity of the fully-charged battery module that is obtained after the battery module is charged at the preset first voltage, thereby greatly enhancing a battery life of the electronic device. In addition, still as shown in FIG. 4, in this embodiment of this application, a charging voltage corresponding to the battery module of the electronic device in the constant voltage charging phase changes.

It should be noted that, if the actual charging voltage (the second voltage) exceeds the preset full-charge voltage corresponding to the battery module, a safety risk may be caused. Therefore, in this embodiment of this application, the charging voltage needs to be adjusted within a safe range corresponding to the battery.

Optionally, the charging apparatus further includes a detection unit 103. The detection unit 103 is configured to detect a voltage value of the second voltage and send the voltage value to the processing unit 101. The detection unit 103 may be configured to measure a battery voltage, an actual charging voltage, a first current, and the like of the battery module 200, and may further send measured related data (for example, a charging voltage and a charging current) to the processing unit 101. The detection unit 103 may be a high-precision voltage and current measurement apparatus. In some embodiments, the detection unit 103 may be further configured to: monitor a battery capacity and a battery cycle count, and obtain a parameter like a battery health status (electric leakage or an impedance). In addition, the detection unit 103 may be a component or a hardware circuit (as shown in FIG. 2) independent of the charging control unit 102, or may be a measurement module or a part of a hardware circuit inside the charging control unit 102. This is not specifically limited in this embodiment of this application.

Optionally, the detection unit 103 may be a voltameter. The voltameter is configured to detect the voltage value of the second voltage and send the voltage value to the processing unit. The detection unit 103 may be a voltameter in the electronic device. The voltameter is configured to measure a related parameter (for example, a battery charging current or an actual battery charging voltage) of the battery module. Therefore, the voltameter may detect the voltage value of the second voltage and send the voltage value to the processing unit. In this embodiment of this application, the voltage value of the second voltage is detected by using an existing component in the electronic device, so that hardware space and costs of the electronic device can be reduced.

Optionally, the voltameter is configured to: when a temperature corresponding to the electronic device is within a preset temperature range, detect the voltage value of the second voltage and send the voltage value to the processing unit. A temperature change of the electronic device affects precision of the second voltage obtained by the voltameter. Table 1 is a schematic table of precision of the voltameter at different temperatures according to an embodiment of this application.

**Table 1: Schematic table of precision of a voltameter**

| Voltage detection precision | Working condition of the voltameter | Precision deviation | | |
|---|---|---|---|---|
| | 3 V~4.4 V@25°C±10°C | -0.5 mV | | 0.5 mV |
| | 3 V~4.4 V@-25°C~85°C | -10 mV | | 10 mV |
| Current detection precision | Ibat≥200 mA@-25°C~85°C | -1.5% | | 1.5% |

As shown in Table 1, the working condition of the voltameter is as follows: When a voltage measurement range of the voltameter is 3 V to 4.4 V, and a temperature range of the electronic device is 25°C±10°C, a precision deviation of voltage detection performed by the voltameter may reach high precision of $\pm 0.5$ mV. When the temperature of the electronic device ranges from -25 °C to 85°C, a precision deviation of voltage detection performed by the voltameter may be $\pm 10$ mV. In addition, a current measurement range of the voltameter is greater than or equal to 200 mA. When the temperature of the electronic device ranges from -25°C to 85°C, current detection can achieve high precision of $\pm 1.5\%$.

Therefore, before the voltage value of the second voltage is obtained by using the voltameter, a current temperature corresponding to the electronic device further needs to be determined. When the temperature corresponding to the electronic device is within the preset temperature range, the voltage value of the charging voltage that is obtained by the voltameter is reliable. Therefore, in a subsequent adjustment process, precision of an adjusted charging voltage is more accurate.

Detection of the temperature of the electronic device may be implemented by using a thermistor. When the temperature of the electronic device changes, a resistance value of the thermistor changes accordingly. Therefore, when a current flowing through the thermistor remains unchanged, according to Ohm's law, a voltage applied to the thermistor by the current changes accordingly. In this embodiment of this application, a current resistance value of the thermistor may be determined by monitoring a voltage corresponding to the thermistor, and then a temperature corresponding to the resistance value is determined based on the resistance value, thereby implementing the detection of the temperature of the electronic device.

Optionally, the adjustment information includes a first adjustment amount, and the first adjustment amount is a difference between the voltage value of the second voltage and a preset voltage value. The adjustment information is adjustment information for the preset first voltage, and the preset voltage value may be understood as a voltage value of a preset full-charge voltage. If it is determined that an actual charging voltage received by the battery module at the preset first voltage does not reach the preset full-charge voltage, the preset first voltage may be adjusted based on the actual charging voltage, so that the actual charging voltage (the second voltage) received by the battery module increases to the preset full-charge voltage accordingly. For example, if the preset first voltage increases by 10 mV, the actual charging voltage (the second voltage) received by the battery module increases by 10 mV accordingly.

For another example, the charging control unit 102 may include a charging chip, and an output end of the charging chip is connected to an input end of the battery module. In other words, the preset first voltage may be understood as a voltage that is output by the charging chip to the battery module based on the preset full-charge voltage. Therefore, in an ideal state (without considering factors such as boarding difference impact and an impedance, or after the charging chip is ideally corrected), the charging chip may output the preset full-charge voltage to the battery module. In this case, the actual charging voltage of the battery module may reach the preset full-charge voltage, that is, preset first voltage (preset full-charge voltage) = second voltage. However, in an actual application process, after the charging chip is on a board, due to impact of error factors (such as a charging chip distortion and a temperature drift error), a charging voltage that is actually output by the charging chip based on the preset full-charge voltage deviates from the preset full-charge voltage, that is, preset first voltage (preset full-charge voltage) > second voltage. Therefore, the first adjustment amount compensates for a difference between the second voltage and the preset full-charge voltage based on the preset first voltage.

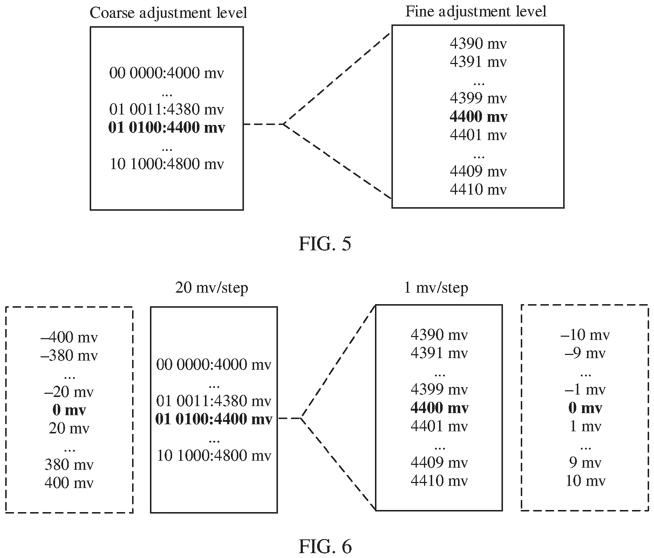

Optionally, the first adjustment amount may include level information for adjusting a voltage (for example, the preset full-charge voltage), and a voltage value corresponding to the level information corresponds to a voltage value of the third voltage. In some possible embodiments, the level information may include coarse adjustment level information and fine adjustment level information. A voltage adjustment amplitude between adjacent levels in the coarse adjustment level information is greater than a voltage adjustment amplitude between adjacent levels in the fine adjustment level information. For example, refer to FIG. 5. FIG. 5 is a schematic diagram of level information according to an embodiment of this application. As shown in FIG. 5, a coarse adjustment level 4400 mV indicated by identifier information (or address information) 010100 corresponds to a voltage 4400 mV, and the coarse adjustment level 4400 mV indicated by the identifier information (or the address information) 010100 further corresponds to 20 fine adjustment levels. A fine adjustment function may be used to extend an adjustment range of $\pm 10$ mV for each coarse adjustment level, that is, 4390 mV to 4410 mV. In this case, the level information carried in the first adjustment amount may include coarse adjustment level information and fine adjustment level information that respectively correspond to adjusted voltages.

Optionally, the first adjustment amount may further include identifier information of a step and an adjustment quantity of the step. The step is an adjustment amplitude of a voltage (for example, the preset full-charge voltage) that is supported by the charging apparatus, and may include 20 mV/step (20 mV per step), 10 mV/step, 5 mV/step, 1 mV/step, or the like. That is, when the voltage adjustment amplitude is 20 mV/step, during adjustment of a fourth voltage, it may be determined that a voltage amplitude that can be adjusted for a single time is 20 mV. For example, if a current value of the fourth voltage is 4400 mV, and a value that is of an adjusted fourth voltage and that is determined by the charging apparatus is 4425 mV, the charging apparatus needs to adjust the current fourth voltage upwards by a voltage amplitude of one 20 mV/step and five 1 mV/step. In this case, the first adjustment amount may directly include identifier information respectively corresponding to 20 mV/step and 1 mV/step, and adjustment quantities respectively corresponding to 20 mV/step and 1 mV/step. FIG. 6 is a schematic diagram of another piece of level information according to an embodiment of this application. As shown in FIG. 6, a level of 20 mV/step added by one 20 mV corresponds to 4420 mV in the coarse adjustment level information 010101 shown in FIG. 5, and a level of 1 mV/step added by five 1 mV corresponds to 4425 mV in the fine adjustment level information shown in FIG. 5.

It should be noted that information specifically carried in the first adjustment amount and a voltage adjustment manner are not specifically limited in this embodiment of this application.

Optionally, the processing unit 101 may be configured to: obtain, based on a value relationship between the voltage value of the second voltage and the preset voltage value, the adjustment information corresponding to the preset first voltage. Adjustment of the preset first voltage is determined based on the value relationship between the voltage value of the second voltage (a voltage value of the actual charging voltage) and the preset voltage value (namely, a voltage value of the preset full-charge voltage), so that a final battery level of the battery obtained when charging ends can be closer to an ideal full battery capacity. In this way, a battery life is improved. In addition, a safety risk that occurs because the actual charging voltage is greater than the preset full-charge voltage of the battery can be avoided, and charging safety during a charging period can be ensured.

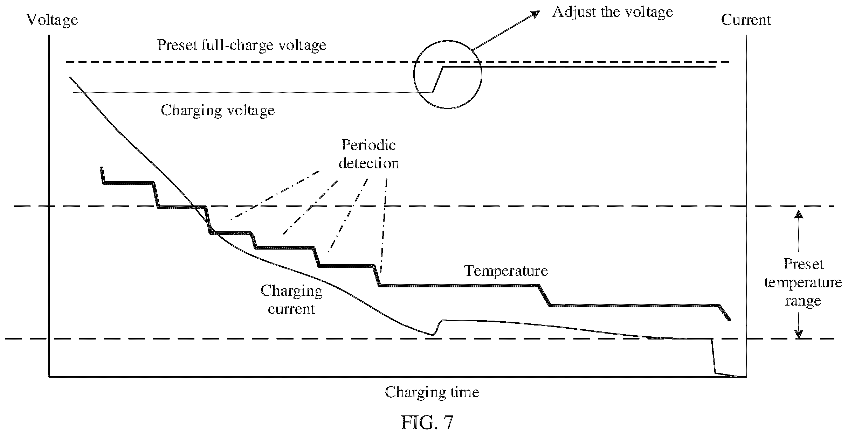

Optionally, the processing unit 101 is specifically configured to: obtain voltage values that are of the second voltage and that respectively correspond to a plurality of time points; compare a voltage value of the second voltage corresponding to each time point in the plurality of time points with the preset voltage value, to obtain a voltage difference corresponding to each time point in the plurality of time points; and determine the adjustment information based on the voltage difference corresponding to each time point in the plurality of time points. The adjustment information for calibrating the charging voltage is determined based on differences between a plurality of obtained voltage values of the second voltages and the preset voltage value. This can reduce an error generated when only one charging voltage value is obtained, so that an adjusted charging voltage is more accurate in a subsequent calibration process. Time intervals between every two adjacent time points in the plurality of time points are equal. For example, refer to FIG. 7. FIG. 7 is a schematic diagram of detecting a current and a voltage corresponding to a battery in a constant voltage charging phase based on FIG. 4 according to an embodiment of this application. When a temperature corresponding to the electronic device is within a preset temperature range, the voltameter may periodically detect the voltage value of the second voltage and send the voltage value to the processing unit. A temperature change of the electronic device affects precision of the second voltage obtained by the voltameter. However, if a plurality of voltage values of the second voltage are periodically obtained, the plurality of voltage values of the second voltage are compared with the preset voltage value to obtain a plurality of differences, and then adjustment information is determined based on an average value of the plurality of differences, so that precision of the adjustment information is higher.

Optionally, when the charging process of the battery module enters the constant voltage charging phase, the charging control unit 102 may prompt the detection unit 103 to detect a voltage value of the actual charging voltage (namely, the second voltage) of the battery module, and obtains, based on the voltage value of the actual charging voltage and the preset voltage value, the adjustment information corresponding to the preset first voltage, namely, the first adjustment amount in the adjustment information. Therefore, in this embodiment of this application, a final battery level of the battery obtained when charging ends can be closer to an ideal full battery capacity, so that an actual full-charge voltage of the battery can be closer to the preset full-charge voltage, thereby improving a battery life. In addition, a safety risk that occurs because the actual charging voltage is greater than the preset full-charge voltage of the battery can be avoided, and charging safety during a charging period can be ensured.

Optionally, the detection unit 103 is further configured to detect a current value of a first current and send the current value to the processing unit, where the first current is a corresponding charging current of the battery module at the preset first voltage. The processing unit is specifically configured to determine the adjustment information based on the voltage value of the second voltage and the current value of the first current. The detection unit 103 is configured to detect a voltage value (the voltage value of the second voltage) of a charging voltage corresponding to the battery module at the current preset first voltage, and is further configured to detect the current value of the current first current. The processing unit 101 may further determine the adjustment information based on the obtained voltage value of the second voltage and the obtained current value of the first current. In addition, the detection unit may alternatively be a voltameter.

Optionally, the adjustment information includes a second adjustment amount. The second adjustment amount is a variation by which the fourth voltage that is output by the charging chip varies with the charging current, and the second adjustment amount is positively correlated with the charging current. The charging control unit may include a charging chip, and charge the battery module by using a fourth voltage that is output by the charging chip. The charging chip may be connected to the battery module through, for example, a conducting wire. Because the conducting wire has an impedance, the fourth voltage that is output by the charging chip is divided by the impedance. In other words, the preset first voltage may be understood as a voltage that is input to the battery module and that is obtained after the fourth voltage is divided by the impedance. Therefore, the charging apparatus may compensate, based on the voltage obtained through voltage division by the impedance, the fourth voltage that is output by the charging chip, to adjust the preset first voltage. In addition, a charging voltage of the battery module needs to keep stable in the constant voltage charging phase. Therefore, as charging time increases, power of the battery module gradually increases, and the first current gradually decreases. Consequently, the voltage obtained through voltage division by the impedance also gradually decreases. Therefore, the

EP 4 475 381 A1

second adjustment amount in the adjustment information for the preset first voltage is a variation by which the preset first voltage varies with the first current, and the second adjustment amount is positively correlated with the first current.

It may be understood that the charging control unit 102 may include a charging chip, and an output end of the charging chip is connected to an input end of the battery module. Due to an additional impedance existing in a printed circuit board (printed circuit board, PCB) cable, a battery connector, a charging connection wire, or the like inside the electronic device, the charging voltage that is output by the charging chip deviates from the charging voltage actually obtained by the battery module (as shown in the related embodiment shown in FIG. 1). Therefore, in this embodiment of this application, all of the additional impedance existing in the charging process may be equivalent to an equivalent resistance, and the output end of the charging chip is connected to the input end of the battery module by using the equivalent resistance.

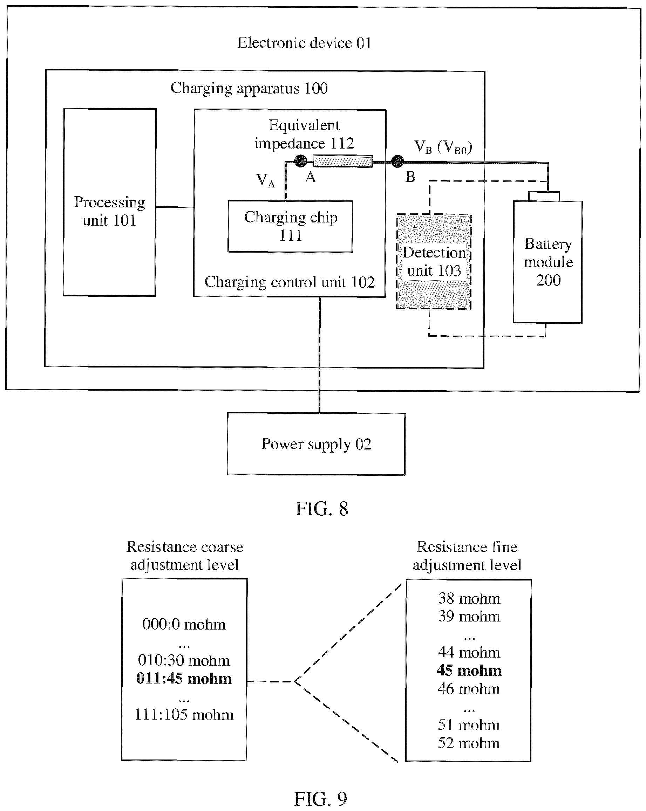

Therefore, refer to FIG. 8. FIG. 8 is a schematic diagram of a structure of another charging apparatus according to an embodiment of this application. As shown in FIG. 8, the charging control unit 102 may further include a charging chip 111 and an equivalent impedance 112. The equivalent impedance 112 may include a first end A and a second end B. The first end A of the equivalent impedance 112 is connected to an output end of the charging chip 111, and the second end B of the equivalent impedance 112 is connected to an input end of the battery module 200. Therefore, the preset first voltage $V_{B0}$ is a voltage that is input to the battery module 200 and that is obtained after $V_{A0}$ is divided by the equivalent impedance 112, and $V_{A0}$ is a voltage that is theoretically output by the charging chip 111 based on a preset full-charge voltage $V_0$. That is, in this case, $V_{A0}$ may be understood as $V_0$, and $V_{A0}=V_0$. Therefore, when voltage division of the equivalent impedance 112 is considered for the charging chip 111, the foregoing IR compensation manner is used to raise the output voltage of the charging chip based on the preset full-charge voltage $V_0$ of the charging chip and a compensation voltage value corresponding to the equivalent impedance 112. In this case, a relationship between the preset first voltage $V_{B0}$ and $V_{A0}$ is expressed by using a formula: $V_{A0}=V_{B0}+I\times R0$ (where I is a current value of a first current, and the first current is a charging current corresponding to the battery module at the preset first voltage; and R0 is a preconfigured value of the equivalent impedance).

In addition, the equivalent impedance 112 is equivalent to an actual impedance (equivalent to the equivalent resistance R shown in FIG. 1) between the charging chip and the battery module. In other words, the charging chip and the battery module need to be connected through, for example, a conducting wire, and there is a line impedance on the conducting wire. In addition, there are also impedances at both an access end between the conducting wire and the battery module, and at an outgoing end between the conducting wire and the charging chip. Therefore, the charging voltage that is output by the charging chip can be applied to the battery module only after a series of voltage reduction performed by the impedance, and the equivalent impedance 112 is equivalent to all impedances between the charging chip 111 and the battery module 200.

First, it should be noted that, as shown in FIG. 8, in an actual application process, after the charging chip 111 is on a board, due to impact of error factors (such as a charging chip distortion and a temperature drift error), an actual voltage $V_A$ that is output by the charging chip 111 based on the preset full-charge voltage deviates from the preset full-charge voltage $V_0$. In other words, the fourth voltage $V_A$ may be understood as the voltage that is actually output by the charging chip 111. The second voltage is an actual charging voltage of the battery module 200, that is, the second voltage $V_B$ is a value of the charging voltage that is input to the battery module and that is obtained after the fourth voltage $V_A$ is divided by the equivalent impedance 112. When actual voltage division of the equivalent impedance 112 is considered for the charging chip 111, the foregoing IR compensation manner is used to raise the voltage (namely, the actual fourth voltage $V_A$) that is actually output by the charging chip based on a compensation voltage value actually corresponding to the equivalent impedance 112. In this case, a relationship between the second voltage $V_B$ and the fourth voltage $V_A$ may be expressed by using a formula: $V_A=V_B+I\times R1$ (where R1 is an actual resistance value of the equivalent impedance).

It may be understood that the preset first voltage $V_{B0}$ and the $V_{A0}$ are respectively theoretical values of the second voltage $V_B$ and the fourth voltage $V_A$. That is, when there is no boarding error and a preset configuration value of the equivalent impedance 112 is equal to the actual resistance value, it may be considered that the preset first voltage $V_{B0}$ is equal to the second voltage $V_B$, and the $V_{A0}$ is equal to the fourth voltage $V_A$. Therefore, the first adjustment amount may be understood as a fixed variation that is output by the charging chip. The fixed variation is information for adjusting the preset full-charge voltage in the charging chip, so that the voltage value $V_B$ of the second voltage is consistent with the preset full-charge voltage $V_0$ as much as possible. The preset full-charge voltage $V_0$ in the charging chip 111 is increased, which may enable the actual voltage value $V_A$ of the fourth voltage to increase accordingly. Further, when a voltage division ratio (namely, a resistance value) of the equivalent impedance remains unchanged, the voltage value $V_B$ of the second voltage increases accordingly, and a value of an increased voltage (namely, the first adjustment amount) does not change with a change of a charging current. Therefore, the first adjustment amount may be understood as a fixed variation, and a function of adjustment is to implement a fixed value deviation based on an original voltage that is output by the charging chip.

Second, it should be noted that, in the constant voltage charging phase, the charging control unit 102 needs to keep the charging voltage for the battery module 200 unchanged (that is, the second voltage $V_B$ remains unchanged). Consequently, as a battery voltage at a battery end gradually increases, a charging current for the battery module 200 gradually decreases. Therefore, as shown in the formula $V_A=V_B+I\times R1$ in the embodiment shown in FIG. 8, because the resistance value of the equivalent impedance 112 does not change, a voltage difference between the actual fourth voltage $V_A$ and the voltage value $V_B$ of the second voltage gradually decreases. Therefore, in this embodiment of this application, when compensation adjustment is performed on the charging voltage of the battery module based on the actual resistance value of the equivalent impedance 112, a value of the second adjustment amount may change in real time, and is positively correlated with a charging current.

In addition, the fourth voltage $V_A$ that is output by the charging chip 111 needs to pass through the equivalent impedance 112 (a value of the equivalent impedance is an actual resistance value and is greater than 0) before being input to the battery module 200. Therefore, it may be understood that the fourth voltage $V_A$ that is output by the charging chip 111 needs to compensate for the voltage division of the equivalent impedance 112, so that the second voltage $V_B$ can reach the preset full-charge voltage (namely, an ideal battery full-charge voltage). Therefore, when I is the battery charging current value, the fourth voltage $V_A$ is the voltage value that is actually output by the charging chip 111, R0 is the preconfigured value of the equivalent impedance 112, Vmax is a voltage value (namely, the preset voltage value) of the preset full-charge voltage after a safety threshold is considered, R1 is the actual impedance value of the equivalent impedance 112, and $V_{A-Rint}$ is a voltage value that is actually output by the charging chip 111 when a value of R0 is 0, or $V_{A-Rint}$ may be understood as an actual voltage value of the preset full-charge voltage $V_0$ of the charging chip 111 after the charging chip 111 is on a board, the foregoing variables satisfy the following relationship formulas:

$$V_A = V_{A-Rint} + I \times R0; \text{ and } V_A = V_B + I \times R1$$

(the formula in the embodiment shown in FIG. 8).

According to the foregoing formulas, an expression of the actual charging voltage $V_B$ of the battery module may be obtained as follows:

$$V_B = V_A - I \times R1 = V_{A-Rint} + I \times (R0 - R1) = V_{A-Rint} + I \times \delta, \text{ where } \delta = R0 - R1$$

A trimming value corresponding to the equivalent impedance may be calculated according to the foregoing relational formula.

$V_x$ and $V_{x-1}$ are respectively charging voltages (namely, the voltage values $V_B$ of the second voltage) that correspond to the battery module and that are collected at two consecutive times, and $I_x$ and $I_{x-1}$ are respectively charging currents that correspond to the battery module at $V_x$ and $V_{x-1}$ and that are collected at two consecutive times.

$$V_x = V_{A-Rint} + I_x \times \delta; \text{ and } V_{x-1} = V_{A-Rint} + I_{x-1} \times \delta$$

It can be learned from the foregoing two formulas that a difference $\delta$ between the default configured R0 and the actual R1 may be calculated as $\delta = \Delta V_x / \Delta I_x$, where $\Delta V_x = V_x - V_{x-1}$, and $\Delta I_x = I_x - I_{x-1}$.

In conclusion, the processing unit 101 in this embodiment of this application may obtain, based on at least two groups of voltage values of the second voltage and at least two groups of current values of the charging currents, a difference between the actual resistance value R1 of the equivalent impedance 112 in the electronic device and the resistance value R0 that is of the equivalent impedance 112 and that is preconfigured in the charging chip 111, and compensate, based on the difference, the fourth voltage that is output by the charging chip 111, so that the voltage value $V_B$ of the second voltage reaches the preset full-charge voltage after being divided by the equivalent impedance 112. For example, in the constant voltage charging phase, two groups of charging voltages of the battery module and two groups of charging currents of the battery module are obtained, and an impedance compensation difference is calculated and determined, to determine a voltage compensation value of the charging control unit for the impedance.

Optionally, the second adjustment amount may include resistance level information for adjusting a voltage divided by the equivalent impedance 112, and a resistance value corresponding to the resistance level information is the actual resistance value of the equivalent impedance 112 in the electronic device, to correct a resistance value originally configured in the charging chip 111. In some possible embodiments, the resistance level information may also include resistance coarse adjustment level information and resistance fine adjustment level information, where a resistance adjustment amplitude between adjacent levels in the resistance coarse adjustment level information is greater than a resistance adjustment amplitude between adjacent levels in the resistance fine adjustment level information. For example, refer to FIG. 9. FIG. 9 is a schematic diagram of resistance level information according to an embodiment of this application. As shown in FIG. 9, a resistance coarse adjustment level 45 mohm (mohm) indicated by identifier information (or address information) 011 corresponds to a resistance value 45 mohm, and the resistance coarse adjustment level 45 mohm indicated by the identifier information (or the address information) 011 further corresponds to 15 resistance fine adjustment levels. A fine adjustment function may be used to extend an adjustment range of $\pm 15$ mohm for each coarse adjustment level, that is, 38 mohm to 52 mohm. In this case, the level information carried in the second adjustment amount may include resistance coarse adjustment level information and resistance fine adjustment level information that respectively correspond to adjusted voltages.

It may be understood that the second adjustment amount is actually proportional coefficient adjustment, and a function of the adjustment is to implement, based on the original voltage that is output by the charging chip, a voltage deviation value that changes with the charging current. Therefore, information specifically carried in the second adjustment amount and a manner of adjusting the voltage are not specifically limited in this embodiment of this application.

It should be noted that, during one charging period, the adjustment information sent by the processing unit to the charging control unit may include both the first adjustment amount and the second adjustment amount, or may separately include the first adjustment amount and the second adjustment amount. This is not specifically limited in this embodiment of this application.

It should be further noted that, for the foregoing adjustment of the charging voltage in the constant voltage charging phase, it needs to determine, based on a safety threshold constraint of the battery voltage, whether a calibration condition is met. If the condition is met, the adjustment may be performed. If the condition is not met, the adjustment of the charging voltage in the constant voltage charging phase is given up during the current charging period. The safety threshold constraint of the battery voltage means that an actual battery voltage corresponding to the battery does not exceed the preset full-charge voltage after one charging period ends. Therefore, the calibration condition is that it needs to be determined whether a difference between a current charging voltage of the battery module and the preset full-charge voltage is less than a safety threshold. If the difference is less than the safety threshold, no adjustment is required; or if the difference is greater than the safety threshold, adjustment is required.

It should be further noted that, if the charging apparatus adjusts the preset first voltage during the current charging period, after the current charging period ends, the adjustment on the preset first voltage needs to be rolled back. That is, it may be understood as the following: Default level configuration is restored, to prevent a safety risk that is caused by an excessively large actual charging voltage caused by impact of another factor (for example, temperature) when charging is performed at the current third voltage during a next charging period.

An embodiment of this application provides a charging apparatus, applied to the field of battery charging technologies, to adjust a charging voltage in a constant voltage charging phase, so as to ensure a battery life and power consumption safety of an electronic device. The charging apparatus includes a charging control unit and a processing unit. In the constant voltage charging phase, the charging control unit may output the preset first voltage (the preset first voltage is a voltage that is output by the charging control unit to a battery module based on a preset full-charge voltage) to the battery module. In the constant voltage charging phase, the processing unit may obtain a voltage value (which is equivalent to an actual charging voltage value, namely, a voltage value of an actual charging voltage, that is received by the battery module when the charging control unit outputs a current preset first voltage to the battery module) of a second voltage corresponding to the battery module in the constant voltage charging phase; and obtain, based on the voltage value of the second voltage, adjustment information corresponding to the preset first voltage. The charging control unit may further adjust the preset first voltage in the constant voltage charging phase based on the adjustment information, and output a third voltage to the battery module. In this way, when the charging control unit outputs the third voltage to the battery module, an actual charging voltage received by the battery module is closer to the preset full-charge voltage in a case in which the actual charging voltage does not exceed the preset full-charge voltage, thereby improving battery charging precision. In addition, in this embodiment of this application, a charging voltage in a charging process is obtained, so that a current charging voltage of the battery module can be adjusted based on impact of each factor in the actual charging process (that is, the charging voltage of the battery module changes in the constant voltage charging phase). In this way, impact of factors such as board-level stress, a temperature, and component aging on the battery module in the actual charging process can be avoided, and the charging voltage can be further adjusted in a timely manner during a charging period, so that the battery during a current charging period can reach an ideal charging state. This avoids a case in which the battery is found not fully charged only after charging is completed, and even avoids a case in which a charging voltage is excessively high. Therefore, in this embodiment of this application, an actual charging voltage of the battery module may be adjusted in the constant voltage charging phase, to ensure a battery life of the electronic device.

Based on the electronic device provided in FIG. 2 and the structure of the charging apparatus provided in FIG. 3 or FIG. 8, and with reference to the charging method provided in this application, the technical problem proposed in this application is specifically analyzed and resolved.

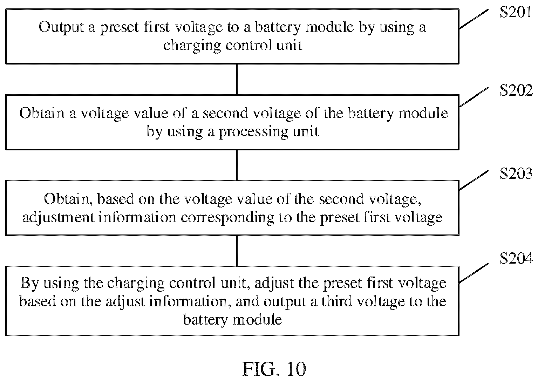

FIG. 10 is a schematic flowchart of a charging method according to an embodiment of this application. The method may be applied to the electronic device in FIG. 2, and the electronic device includes a battery module and a charging apparatus. The battery module corresponds to a constant voltage charging phase in a charging process. The charging apparatus may include a processing unit and a charging control unit, and may further include a detection unit. The charging apparatus may be configured to support and perform step S201 to step S204 in a method procedure shown in FIG. 10. In the constant voltage charging phase, the method may include the following step S202 to step S204, and may further include step S201. The constant voltage charging phase is a phase in which a battery is charged at a constant voltage. In the constant voltage charging phase, the method includes the following steps.

Step S201: Output a preset first voltage to the battery module by using the charging control unit.

Specifically, in the constant voltage charging phase, the charging apparatus may output the preset first voltage to the battery module by using the charging control unit, that is, charge the battery module at the preset first voltage.

Step S202: Obtain a voltage value of a second voltage of the battery module by using the processing unit.

Specifically, the voltage value of the second voltage of the battery module is obtained by using the processing unit, where the second voltage is an actual charging voltage obtained by the battery module at the preset first voltage. In addition, the preset first voltage is a charging voltage that may be theoretically obtained by the battery module.

Optionally, the voltage value of the second voltage is detected and the voltage value is sent to the processing unit by using the detection unit. The charging apparatus further includes the detection unit. In the constant voltage charging phase, the detection unit (for example, a high-precision detection apparatus) may be used to detect the voltage value of the second voltage. The detection unit may be located inside the charging control unit or inside the processing unit, or the detection unit is independent of the charging control unit and the processing unit, and is coupled to the battery module.

Optionally, the voltage value of the second voltage is detected and the voltage value is sent to the processing unit by using a voltameter. The detection unit may be a voltameter in the electronic device. The voltameter is configured to measure a related parameter (for example, a battery charging current or an actual battery charging voltage) of the battery module. Therefore, the voltameter may detect the voltage value of the second voltage and send the voltage value to the processing unit. The voltage value of the second voltage is detected by using an existing component in the electronic device, so that hardware space and costs of the electronic device are reduced.

Optionally, when a temperature corresponding to the electronic device is within a preset temperature range, the voltage value of the second voltage is detected and the voltage value is sent to the processing unit by using the voltameter. A temperature change of the electronic device affects precision of the second voltage obtained by the voltameter. Therefore, in this embodiment of this application, before the voltage value of the second voltage is obtained, a current temperature corresponding to the electronic device further needs to be determined. When the temperature corresponding to the electronic device is within the preset temperature range, the voltage value of the charging voltage that is obtained by the voltameter is reliable. Therefore, in a subsequent adjustment process, precision of an adjusted charging voltage is more accurate.

Optionally, a current value of a first current is detected and the current value is sent to the processing unit by using the detection unit, where the first current is a charging current corresponding to the battery module at the preset first voltage. The obtaining, based on the voltage value of the second voltage, adjustment information corresponding to the preset first voltage includes: determining the adjustment information based on the voltage value of the second voltage and the current value of the first current. The detection unit is configured to detect a voltage value (the voltage value of the second voltage) of a charging voltage corresponding to the battery module at the current preset first voltage, and is further configured to detect the current value of the current charging current. The processing unit may further determine the adjustment information based on the obtained voltage value of the second voltage and the obtained current value of the charging current. In addition, the detection unit may alternatively be a voltameter.

Optionally, that a current value of a first current is detected and the current value is sent to the processing unit by using the detection unit includes: detecting a voltage value of the second voltage and a current value of the first current that correspond to each of a plurality of time points and sending the voltage value of the second voltage and the current value of the first current to the processing unit by using the detection unit. The determining the adjustment information based on the voltage value of the second voltage and the current value of the first current includes: determining the adjustment information based on the voltage value of the second voltage and the current value of the first current that correspond to each of the plurality of time points. To improve precision of a calibrated charging voltage, in this embodiment of this application, a plurality of groups of charging voltage values (namely, the voltage values of the second voltage) and a plurality of groups of first current values in the constant voltage charging phase are obtained, to avoid a case in which data is inaccurate when only one group of charging voltage values and one group of first current values are obtained, and further avoid a case in which the determined adjustment information is inaccurate. In addition, a plurality of groups of data may be obtained periodically, that is, time intervals between any adjacent time points in the plurality of time points are equal.

Step S203: Obtain, based on the voltage value of the second voltage, the adjustment information corresponding to the preset first voltage.

Specifically, the adjustment information corresponding to the preset first voltage is obtained based on the voltage value of the second voltage. The adjustment information may be used to adjust a charging voltage in the constant voltage charging phase, to ensure a battery life and power consumption safety of an electronic device.

Optionally, that the adjustment information corresponding to the preset first voltage is obtained based on the voltage value of the second voltage includes: obtaining, based on the voltage value of the second voltage and the preset voltage value, the adjustment information corresponding to the preset first voltage.

Optionally, the obtaining, based on the voltage value of the second voltage and the preset voltage value, the adjustment information corresponding to the preset first voltage includes: comparing a voltage value of the second voltage corresponding to each time point in the plurality of time points with the preset voltage value, to obtain a voltage difference corresponding to each time point in the plurality of time points; and determining the adjustment information based on the voltage difference corresponding to each time point in the plurality of time points.

Optionally, the adjustment information includes a first adjustment amount, and the first adjustment amount is a difference between the voltage value of the second voltage and a preset voltage value. The adjustment information is adjustment information for the preset first voltage, and the preset voltage value is a voltage value of a preset full-charge voltage. The preset full-charge voltage is a battery full-charge voltage that is preset in the battery module. If it is determined that an actual charging voltage received by the battery module at the preset first voltage does not reach the preset full-charge voltage, the preset first voltage may be adjusted based on the preset full-charge voltage, so that the actual charging voltage (the second voltage) received by the battery module increases to the preset full-charge voltage accordingly. For example, if the preset first voltage increases by 10 mV, the actual charging voltage (the second voltage) received by the battery module increases by 10 mV accordingly.

Optionally, the adjustment information includes a second adjustment amount. The second adjustment amount is a variation by which the preset first voltage varies with the first current, and the second adjustment amount is positively correlated with the first current. The charging control unit may include a charging chip, and charge the battery module by using a fourth voltage that is output by the charging chip. The charging chip may be connected to the battery module through, for example, a conducting wire. Because the conducting wire has an impedance, the fourth voltage that is output by the charging chip is divided by the impedance. In other words, the preset first voltage may be understood as a voltage that is input to the battery module and that is obtained after the fourth voltage is divided by the impedance. Therefore, the charging apparatus may compensate, based on the voltage obtained through voltage division by the impedance, the fourth voltage that is output by the charging chip, to adjust the preset first voltage. In addition, a charging voltage of the battery module needs to keep stable in the constant voltage charging phase. Therefore, as charging time increases, power of the battery module gradually increases, and the first current gradually decreases. Consequently, the voltage obtained through voltage division by the impedance also gradually decreases. Therefore, the second adjustment amount in the adjustment information for the preset first voltage is a variation by which the preset first voltage varies with the first current, and the second adjustment amount is positively correlated with the first current.

Step S204: By using the charging control unit, adjust the preset first voltage based on the adjust information, and output a third voltage to the battery module.

Specifically, the charging control unit may adjust the preset first voltage based on the adjustment information to obtain the third voltage, and may further output the third voltage to the battery module, so that when the charging control unit outputs the third voltage to the battery module, the actual charging voltage received by the battery module is closer to the preset full-charge voltage, thereby improving a battery life of the electronic device. The third voltage is an adjusted first voltage.

Optionally, a voltage value of the third voltage is greater than a voltage value of the preset first voltage. In other words, correspondingly, when the charging control unit outputs the third voltage to the battery module, an actual charging voltage value received by the battery module is greater than an actual charging voltage value received by the battery module when the charging control unit outputs the current preset first voltage to the battery module. Therefore, a capacity of the fully-charged battery module that is obtained after the battery module is charged at the third voltage is higher than a capacity of the fully-charged battery module that is obtained after the battery module is charged at the preset first voltage, thereby greatly enhancing a battery life of the electronic device.

An embodiment of this application provides a charging apparatus, applied to the field of battery charging technologies, to adjust a charging voltage in a constant voltage charging phase, so as to ensure a battery life and power consumption safety of an electronic device. In the constant voltage charging phase, the charging apparatus may output the preset first voltage (the preset first voltage is a voltage that is output by the charging apparatus to the battery module based on the preset full-charge voltage, and the preset full-charge voltage may be understood as a preset battery full-charge voltage) to the battery module. The charging apparatus includes a charging control unit and a processing unit. The processing unit is equivalent to a processing unit, a processing chip, a system-on-a-chip (System-on-a-chip, SOC), or the like in the electronic device. In the constant voltage charging phase, the voltage value (the voltage value of the second voltage is equivalent to an actual charging voltage value received by the battery module when the charging control unit outputs a current preset first voltage to the battery module) of the second voltage corresponding to the battery module in the constant voltage charging phase may be obtained; and the adjustment information corresponding to the preset first voltage is obtained based on the voltage value of the second voltage. The charging control unit may further adjust the preset first voltage in the constant voltage charging phase based on the adjustment information, and output the third voltage (the third voltage is the adjusted first voltage) to the battery module. In this way, when the charging control unit outputs the third voltage to the battery module, an actual charging voltage value received by the battery module is closer to a voltage value (namely, the preset voltage value) of the preset full-charge voltage, thereby improving battery charging precision. In addition, the actual charging voltage does not exceed the preset full-charge voltage. In addition, in this embodiment of this application, a charging voltage for the battery module in the charging process is obtained, so that a current charging voltage of the battery module can be adjusted based on impact of each factor in the actual charging process (that is, in this embodiment of this application, the charging voltage of the battery module changes in the constant voltage charging phase). In this way, impact of factors such as board-level stress, a temperature, and component aging on the battery module in the actual charging process can be avoided, and the charging voltage can be further adjusted in a timely manner during a charging period, so that the battery during a current charging period can reach an ideal charging state. This avoids a case in which the battery is found not fully charged only after charging is completed, and even avoids a case in which a charging voltage is excessively high. Therefore, in this embodiment of this application, an actual charging voltage of the battery module may be adjusted in the constant voltage charging phase, to ensure a battery life of the electronic device.

It should be noted that for related content of step S201 to step S204 in FIG. 10, correspondingly refer to related descriptions in the embodiments in FIG. 3 to FIG. 9. Details are not described again in this embodiment of this application.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like, and may be specifically a processor in a computer device) to perform all or some of the steps of the methods described in embodiments of this application. The foregoing storage medium may include any medium that can store program code, such as a USB flash drive, a removable hard disk, a magnetic disk, an optical disc, a read-only memory (Read-Only Memory, ROM for short), or a random access memory (Random Access Memory, RAM for short).

In conclusion, the foregoing embodiments are merely intended for describing the technical solutions of this application, rather than limiting this application. Although this application is described in detail with reference to the foregoing embodiments, a person of ordinary skill in the art should understand that modifications may still be made to the technical solutions described in the foregoing embodiments, or equivalent replacements may still be made to some technical features thereof. These modifications or replacements do not make the essence of the corresponding technical solutions depart from the spirit and scope of the technical solutions of embodiments of this application.

## Claims

1. A charging apparatus, used in an electronic device, wherein the electronic device comprises a battery module, and the battery module corresponds to a constant voltage charging phrase in a charging process; and the apparatus comprises a charging control unit and a processing unit, wherein

   the charging control unit is configured to output a preset first voltage to the battery module in the constant voltage charging phase;
   the processing unit is configured to: obtain a voltage value of a second voltage of the battery module in the constant voltage charging phase, and obtain, based on the voltage value of the second voltage, adjustment information corresponding to the preset first voltage, wherein the second voltage is an actual charging voltage obtained by the battery module at the preset first voltage; and

the charging control unit is configured to: adjust the preset first voltage based on the adjustment information, and output a third voltage to the battery module, wherein the third voltage is an adjusted first voltage.

2. The apparatus according to claim 1, wherein a voltage value of the third voltage is greater than a voltage value of the preset first voltage.

3. The apparatus according to claim 1 or 2, wherein the charging apparatus further comprises a detection unit; and the detection unit is configured to detect a voltage value of the second voltage and send the voltage value to the processing unit.

4. The apparatus according to claim 3, wherein the detection unit is a voltameter; and the voltameter is configured to detect the voltage value of the second voltage and send the voltage value to the processing unit.

5. The apparatus according to claim 4, wherein the voltameter is configured to: when a temperature corresponding to the electronic device is within a preset temperature range, detect the voltage value of the second voltage and send the voltage value to the processing unit.

6. The apparatus according to any one of claims 3 to 5, wherein the adjustment information comprises a first adjustment amount, and the first adjustment amount is a difference between the voltage value of the second voltage and a preset voltage value.

7. The apparatus according to any one of claims 3 to 6, wherein the detection unit is further configured to detect a current value of a first current and send the current value to the processing unit, wherein the first current is a corresponding charging current of the battery module at the preset first voltage; and

the processing unit is specifically configured to determine the adjustment information based on the voltage value of the second voltage and the current value of the first current.

8. The apparatus according to claim 7, wherein the adjustment information comprises a second adjustment amount, the second adjustment amount is a variation by which the preset first voltage varies with the first current, and the second adjustment amount is positively correlated with the first current.

9. A charging method, applied to an electronic device, wherein the electronic device comprises a battery module, and the battery module corresponds to a constant voltage charging phase in a charging process; and in the constant voltage charging phase, the method comprises:

outputting a preset first voltage to the battery module by using a charging control unit;

by using a processing unit, obtaining a voltage value of a second voltage of the battery module, and obtaining, based on the voltage value of the second voltage, adjustment information corresponding to the preset first voltage, wherein the second voltage is an actual charging voltage obtained by the battery module at the preset first voltage; and

by using the charging control unit, adjusting the preset first voltage based on the adjustment information, and outputting a third voltage to the battery module, wherein the third voltage is an adjusted first voltage.

10. The method according to claim 9, wherein a voltage value of the third voltage is greater than a voltage value of the preset first voltage.

11. The method according to claim 9 or 10, wherein the method further comprises:
detecting the voltage value of the second voltage and sending the voltage value to the processing unit by using a detection unit.

12. The method according to claim 11, wherein the detection unit is a voltameter; and
the detecting the voltage value of the second voltage and sending the voltage value to the processing unit by using a detection unit comprises:
detecting the voltage value of the second voltage and sending the voltage value to the processing unit by using the voltameter.

13. The method according to claim 12, wherein the detecting the voltage value of the second voltage and sending the voltage value to the processing unit by using the voltameter comprises:
when a temperature corresponding to the electronic device is within a preset temperature range, detecting the voltage value of the second voltage and sending the voltage value to the processing unit by using the voltameter.

14. The method according to any one of claims 11 to 13, wherein the adjustment information comprises a first adjustment amount, and the first adjustment amount is a difference between the voltage value of the second voltage and a preset voltage value.

15. The method according to any one of claims 11 to 14, wherein the method further comprises:

detecting a current value of a first current and sending the current value to the processing unit by using the detection unit, wherein the first current is a charging current corresponding to the battery module at the preset first voltage; and
the obtaining, based on the voltage value of the second voltage, adjustment information corresponding to the preset first voltage comprises:
determining the adjustment information based on the voltage value of the second voltage and the current value of the first current.

16. The method according to claim 15, wherein the adjustment information comprises a second adjustment amount, the second adjustment amount is a variation by which the preset first voltage varies with the first current, and the second adjustment amount is positively correlated with the first current.

17. An electronic device, wherein the electronic device comprises a battery module and the charging apparatus according to any one of claims 1 to 8, and the charging apparatus is electrically connected to the battery module.

18. A computer program product, wherein the computer program product comprises a computer program, and when the computer program is executed by a computer or a processor, the computer or the processor is enabled to perform the method according to any one of claims 9 to 16.

19. A computer-readable storage medium, wherein the computer-readable storage medium stores a computer program, and when the computer program is executed by a computer or a processor, the method according to any one of claims 9 to 16 is implemented.

FIG. 1

FIG. 2

Electronic device 01

Charging apparatus 100

Processing unit 101

Charging control unit 102

Detection unit 103

Battery module 200

Power supply 02

FIG. 3

Voltage

Current

Adjust the voltage

Preset full-charge voltage

Charging voltage

Charging current

Charging time

FIG. 4

Coarse adjustment level

Fine adjustment level

```
00 0000:4000 mv
...
01 0011:4380 mv
01 0100:4400 mv
...
10 1000:4800 mv
```

```
4390 mv
4391 mv
...
4399 mv
4400 mv
4401 mv
...
4409 mv
4410 mv
```

FIG. 5

20 mv/step

1 mv/step

```
–400 mv
–380 mv
...
–20 mv
0 mv
20 mv
...
380 mv
400 mv
```

```
00 0000:4000 mv
...
01 0011:4380 mv
01 0100:4400 mv
...
10 1000:4800 mv
```

```
4390 mv
4391 mv
...
4399 mv
4400 mv
4401 mv
...
4409 mv
4410 mv
```

```
–10 mv
–9 mv
...
–1 mv
0 mv
1 mv
...
9 mv
10 mv
```

FIG. 6

FIG. 7

Electronic device 01

Charging apparatus 100

Equivalent
impedance 112

$V_B$ ($V_{B0}$)

$V_A$   A        B

Processing
unit 101

Charging chip
111

Detection
unit 103

Battery
module
200

Charging control unit 102

Power supply 02

FIG. 8

Resistance coarse
adjustment level

Resistance fine
adjustment level

000:0 mohm
...
010:30 mohm
**011:45 mohm**
...
111:105 mohm

38 mohm
39 mohm
...
44 mohm
**45 mohm**
46 mohm
...
51 mohm
52 mohm

FIG. 9

```
┌─────────────────────────────────────────────────┐      S201
│   Output a preset first voltage to a battery     │  ╱
│   module by using a charging control unit        │
└─────────────────────────────────────────────────┘
                        │
┌─────────────────────────────────────────────────┐      S202
│  Obtain a voltage value of a second voltage of   │  ╱
│    the battery module by using a processing unit │
└─────────────────────────────────────────────────┘
                        │
┌─────────────────────────────────────────────────┐      S203
│   Obtain, based on the voltage value of the      │  ╱
│   second voltage, adjustment information         │
│   corresponding to the preset first voltage      │
└─────────────────────────────────────────────────┘
                        │
┌─────────────────────────────────────────────────┐      S204
│  By using the charging control unit, adjust the  │  ╱
│  preset first voltage based on the adjust        │
│  information, and output a third voltage to the   │
│  battery module                                  │
└─────────────────────────────────────────────────┘
```

FIG. 10

## INTERNATIONAL SEARCH REPORT

International application No.

**PCT/CN2023/076385**

**A. CLASSIFICATION OF SUBJECT MATTER**

H02J7/00(2006.01)i;H02J7/04(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 恒压, 充电, 容量, 预设电压, 调整, 调节, 补偿, constant voltage, charg+, adjust+, compensat+

**C. DOCUMENTS CONSIDERED TO BE RELEVANT**

| Category* | Citation of document, with indication, where appropriate, of the relevant passages | Relevant to claim No. |
|---|---|---|
| X | CN 107104493 A (VIA TECHNOLOGIES, INC.) 29 August 2017 (2017-08-29) description, paragraphs 30-48, and figures 1-4 | 1-19 |
| X | CN 104753093 A (NANJING CHERVON INDUSTRY CO., LTD.) 01 July 2015 (2015-07-01) description, paragraphs 3-35, and figures 1-4 | 1-19 |
| A | CN 104868566 A (ZHANG HONGYU) 26 August 2015 (2015-08-26) entire document | 1-19 |
| A | CN 106549465 A (GUANGDONG OPPO MOBILE TELECOMMUNICATIONS CO., LTD.) 29 March 2017 (2017-03-29) entire document | 1-19 |
| A | CN 106786849 A (ZHUHAI MEIZU TECHNOLOGY CO., LTD.) 31 May 2017 (2017-05-31) entire document | 1-19 |
| A | CN 109149689 A (CHUMEN WENWEN INFORMATION TECHNOLOGY CO., LTD.) 04 January 2019 (2019-01-04) entire document | 1-19 |

☑ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 April 2023** | **19 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

<p style="text-align:center"><strong>INTERNATIONAL SEARCH REPORT</strong></p>

| | International application No. |
|---|---|
| | **PCT/CN2023/076385** |

**C.    DOCUMENTS CONSIDERED TO BE RELEVANT**

| Category* | Citation of document, with indication, where appropriate, of the relevant passages | Relevant to claim No. |
|---|---|---|
| A | US 6028415 A (SONY CORPORATION) 22 February 2000 (2000-02-22)<br>entire document | 1-19 |

Form PCT/ISA/210 (second sheet) (July 2022)

**INTERNATIONAL SEARCH REPORT**
**Information on patent family members**

International application No.

**PCT/CN2023/076385**

| Patent document cited in search report | | | Publication date (day/month/year) | Patent family member(s) | | | Publication date (day/month/year) |
|---|---|---|---|---|---|---|---|
| CN | 107104493 | A | 29 August 2017 | US | 2018062400 | A1 | 01 March 2018 |
| | | | | TW | 201813237 | A | 01 April 2018 |
| CN | 104753093 | A | 01 July 2015 | US | 2015188335 | A1 | 02 July 2015 |
| | | | | US | 9608466 | B2 | 28 March 2017 |
| CN | 104868566 | A | 26 August 2015 | None | | | |
| CN | 106549465 | A | 29 March 2017 | WO | 2018129976 | A1 | 19 July 2018 |
| CN | 106786849 | A | 31 May 2017 | None | | | |
| CN | 109149689 | A | 04 January 2019 | None | | | |
| US | 6028415 | A | 22 February 2000 | TW | 434969 | B | 16 May 2001 |
| | | | | DE | 69841090 | D1 | 08 October 2009 |
| | | | | EP | 0920106 | A2 | 02 June 1999 |
| | | | | EP | 0920106 | A3 | 02 November 2000 |
| | | | | EP | 0920106 | B1 | 26 August 2009 |
| | | | | KR | 19990045479 | A | 25 June 1999 |
| | | | | KR | 100549813 | B1 | 20 June 2006 |
| | | | | JPH | 11164490 | A | 18 June 1999 |
| | | | | JP | 3767767 | B2 | 19 April 2006 |

Form PCT/ISA/210 (patent family annex) (July 2022)

**REFERENCES CITED IN THE DESCRIPTION**

**Patent documents cited in the description**

- CN 202210294330